# FASCICULE DE BREVET EUROPEEN

(11) **EP 3 050 140 B1**
(45) Date de publication et mention de la délivrance du brevet: **20.03.2019**
(21) Numéro de dépôt: 14777702.3
(22) Date de dépôt: 04.09.2014
(51) Int. Cl.: H01M 4/04, H01M 4/131, H01M 4/1391, H01M 4/505, H01M 4/525, H01M 10/052, H01M 4/02

(54) **PROCEDE DE REALISATION D'UNE ELECTRODE POUR BATTERIE LITHIUM-ION**
VERFAHREN ZUR HERSTELLUNG EINER ELEKTRODE FÜR EINE LITHIUM-IONEN-BATTERIE
METHOD FOR PRODUCING AN ELECTRODE FOR A LITHIUM-ION BATTERY

(30) Priorité: 27.09.2013 FR 1359317
(43) Date de publication de la demande: 03.08.2016
(73) Titulaire: Commissariat à l'Énergie Atomique et aux Énergies Alternatives, 75015 Paris (FR)
(72) Inventeur: MARTIN, Nelly, F-38380 Miribel Les Echelles (FR); JOUANNEAU-SI LARBI, Séverine, F-38590 Sillans (FR); MOUCHETAN, Julie, F-38000 Grenoble (FR)
(74) Mandataire: Cabinet Laurent & Charras
(86) Numéro de dépôt international: PCT/FR2014/052182
(87) Numéro de publication internationale: WO 2015/044550

(56) Documents cités:
- US-A1- 2011 039 140
- US-B1- 6 365 299

## Description

### DOMAINE DE L'INVENTION

L'invention concerne un procédé de fabrication d'une électrode. Ce procédé consiste notamment à calandrer une électrode dont le matériau actif est recouvert d'une couche de protection.

Le domaine d'utilisation de la présente invention se rapporte particulièrement au stockage de l'énergie électrique, notamment les batteries ou accumulateurs électrochimiques au lithium.

### ETAT ANTERIEUR DE LA TECHNIQUE

Dans le domaine du stockage électrique de l'énergie, deux principaux types de batteries sont couramment utilisés : les batteries primaires et les batteries secondaires. Alors que les premières fonctionnent selon une réaction irréversible entre différentes espèces chimiques, les deuxièmes sont des batteries rechargeables.

De manière générale, une batterie comprend un coeur de pile constitué de deux électrodes entre lesquelles est intercalé un électrolyte. Cet électrolyte est généralement supporté par un séparateur d'électrodes.

A titre d'exemple, une batterie secondaire de type lithium-ion peut comprendre un coeur de pile comprenant :
- une électrode positive (cathode) constituée d'au moins un matériau d'insertion du cation lithium ;
- un séparateur d'électrodes ;
- une électrode négative (anode).

Chaque électrode est associée à un collecteur de courant.

La nature des matériaux d'électrodes, et notamment celui de la cathode, permet d'ajuster le potentiel moyen auquel une batterie secondaire fonctionne mais aussi sa capacité spécifique théorique.

A ce titre, un matériau spinelle LMNO (lithium-manganèse-nickel) tel que le LiMn_{1.5}Ni_{0.5}O₄ présente un intérêt non négligeable eu égard à son potentiel, 4,7 V vs Li, et à sa capacité spécifique théorique d'environ 147 mAh g⁻¹.

Cependant, des réactions secondaires entre la cathode et l'électrolyte peuvent altérer les propriétés de ces systèmes électrochimiques.

Ces réactions peuvent entrainer une importante autodécharge mais aussi un dégazage important durant le cyclage.

En outre, des produits issus de la décomposition de l'électrolyte peuvent également endommager la surface de l'électrode. C'est notamment le cas lorsque de l'acide fluorhydrique est formé.

D'autre part, la formation d'une couche de passivation, à l'interface entre la cathode et l'électrolyte, peut également résulter de la dégradation de l'électrolyte. Ce phénomène est plus connu sous l'acronyme CEI, de l'anglais « *Cathode Electrolyte Interface* ».

Diverses approches ont été abordées afin de remédier à cette problématique.

Par exemple, on a proposé de protéger la cathode par dépôt d'une couche d'oxyde de métal isolant ou de phosphate (ZnO, ZrO₂, AlPO₄, Li₃PO₄). Cette méthode a pour conséquence la réduction de pertes de capacité de l'accumulateur, et l'amélioration de la durée de vie de l'électrode.

La couche de protection remplit ainsi le rôle consistant à :
- empêcher les réactions secondaires entre la cathode et l'électrolyte,
- piéger les espèces indésirables issues de la dégradation de l'électrolyte,
- supprimer la dissolution de métaux de transition présents dans le matériau actif de la cathode.

Cependant, ce type de couche de protection n'est pas entièrement satisfaisant en raison notamment de l'absence de procédé permettant de déposer une couche de protection sur la totalité de la surface de matière active, tout en maintenant les propriétés de haute densité énergétique inhérentes au matériau actif de la cathode.

L'art antérieur comprend d'autres alternatives, notamment l'enrobage de l'électrode au moyen d'une couche de protection en matériau électroniquement conducteur, comme le FePO₄, le carbone, ou les oxydes métalliques.

Le dépôt de meilleurs conducteurs ioniques, tel que le LIPON (oxynitrure de phosphate de lithium), a également été étudié. Dans ce cas, le dépôt est généralement réalisé par PVD (dépôt physique en phase vapeur).

Le document US 6,365,299 décrit notamment un procédé consistant à :
- déposer une encre d'électrode sur un substrat ;
- sécher cette encre ;
- calandrer l'encre séchée ;
- déposer une couche de protection sur l'encre séchée et calandrée ;
- calandrer la couche de protection.

Bien que relativement satisfaisants en terme de protection de l'électrode, ces procédés entrainent néanmoins une perte de densité énergétique en raison du manque de profondeur du dépôt, et ce même lorsqu'il est réalisé par CVD ou par ALD.

Le Demandeur a mis au point un procédé permettant de résoudre ce problème technique concernant la perte de densité énergétique, en introduisant une étape de calandrage lors de la formation de la couche de protection.

### EXPOSE DE L'INVENTION

La présente invention concerne un procédé de fabrication d'une électrode pour une batterie secondaire. Cette électrode comprend une couche assurant sa protection contre toute réaction secondaire entre l'électrode et l'électrolyte, et contre les espèces chimiques issues de l'éventuelle dégradation de l'électrolyte. La couche de protection permet en outre de supprimer la dissolution de métaux de transition présents dans le matériau actif de l'électrode. Finalement, la couche de protection est en matériau électroniquement conducteur, ce qui permet de maintenir les propriétés de conduction électronique.

Plus précisément, l'objet de la présente invention est un procédé de réalisation d'une électrode pour une batterie secondaire, comprenant les étapes suivantes :
- dépôt d'une encre comprenant au moins un matériau actif d'électrode, sur un substrat ;
- séchage de l'encre ;
- dépôt d'une couche de protection sur l'encre préalablement séchée ;
- calandrage de l'électrode ainsi formée.

En d'autres termes, au contraire de l'art antérieur, la couche de protection est déposée avant le calandrage de l'électrode, afin de pouvoir bénéficier de la porosité de l'encre séchée pour introduire la couche de protection en surface du matériau actif d'électrode dans l'épaisseur de l'électrode. Le procédé selon l'invention est dépourvu d'étape de calandrage entre le séchage de l'encre et le dépôt de la couche de protection.

La couche de protection peut-être conductrice ioniquement ou isolante.

Dans le cas d'une couche isolante, l'épaisseur de la couche de protection est avantageusement faible, typiquement inférieure à 100 nm, et plus avantageusement encore, inférieure à 5 nm.

Dans le cas d'un dépôt par ALD, l'épaisseur de la couche de protection est par exemple comprise entre 3 et 15 Angstroem.

Dans le cas d'une couche conductrice ionique, de type LIPON par exemple, l'épaisseur de la couche de protection est de préférence comprise entre 20nm et 300nm.

De manière avantageuse, la couche de protection est en oxyde métallique. Il peut être avantageusement choisi parmi Al₂O₃, Cr₂O₃, ZrO, ZrO₂, MgO. De manière encore plus avantageuse, il s'agit d'Al₂O₃.

Selon un mode de réalisation particulier, la couche de protection peut être en phosphate de métal, et notamment un matériau choisi dans le groupe comprenant le Li₃PO₄, le FePO₄, et l'AlPO₄.

La couche de protection peut être déposée par les techniques de dépôt faisant partie des connaissances générales de l'homme du métier. Il peut s'agir préférentiellement d'un dépôt par ALD (dépôt de couche atomique -acronyme anglo-saxon « *Atomic Layer Déposition* »), PVD (dépôt physique en phase vapeur - acronyme anglo-saxon « *Physical vapor deposition* »), CVD (dépôt chimique en phase vapeur - acronyme anglo-saxon « *Chemical Vapor Depostion* »), MBE (épitaxie par jets moléculaires - acronyme anglo-saxon « *Molecular Beam epitaxy* »), EBPVD (dépôt physique en phase vapeur par faisceau d'électrons - acronyme anglo-saxon « *Electron Beam Physical vapor deposition* »), ou PLD (dépôt par ablation laser ou dépôt laser pulsé - acronyme anglo-saxon « *Pulsed Laser deposition* »).

De préférence, il s'agit d'un dépôt ALD, qui présente l'avantage d'être un dépôt conforme, recouvrant l'électrode dans de meilleures conditions d'uniformité.

Les dépôts par ALD sont généralement réalisés à partir d'un précurseur, et notamment un oxyde métallique.

Ainsi, lorsque la couche de protection est en LIPON (oxynitrure de phosphate de lithium), elle peut notamment être obtenu par réaction du Li₃PO₄ avec de l'azote.

L'épaisseur de l'électrode peut varier de de 1 micron à 700 microns, habituellement entre 50 et 500 microns.

Le pourcentage en poids du dépôt est avantageusement inférieur à 10%, de préférence inférieur à 5%, pour conserver une densité massique acceptable.

L'électrode réalisée par mise en oeuvre du procédé - objet de l'invention, est avantageusement une électrode positive lithiée (cathode).

Le matériau actif d'électrode est avantageusement un matériau d'électrode positive. Il s'agit préférentiellement d'un matériau d'insertion du cation lithium. Il peut notamment être choisi dans le groupe comprenant les oxydes spinelle de lithium-manganèse-nickel (par exemple : LiMnMO₄, avec M = Cr, Fe, Co et/ou Ni), les oxydes de cobalt (par exemple : LiCoO₂), les oxydes de vanadium (par exemple : LiV₃O₈, V₂O₅), les oxydes de manganèse (par exemple :LiMn₂O₄, LiMnO₂), le phosphate de fer (par exemple : LiFePO₄), les graphites, le silicium, et les oxydes de titane (par exemple : TiO₂, Li₄Ti₅O₁₂).

De manière avantageuse, il peut s'agir d'un oxyde spinelle de lithium-manganèse-nickel (LMNO), plus avantageusement du LMNO de formule LiMn_{1.5}Ni_{0.5}O₄.

Le matériau d'insertion constituant l'électrode positive peut être déposé sur le substrat par diverses techniques de dépôt comme l'enduction, la sérigraphie, le jet d'encre ou la pulvérisation.

Par exemple, une encre, notamment à base de LMNO, peut être imprimée ou enduite directement sur le substrat selon les techniques faisant partie des connaissances de l'homme du métier.

En outre, et de manière avantageuse, l'encre d'électrode positive est à base d'un solvant.

Les encres d'électrode positive sont préférentiellement des encres aqueuses ou organiques comprenant un liant polymère de type acide polyacrylique ou fluoropolymère.

L'encre d'électrode peut également comprendre des particules conductrices, par exemple du noir de carbone.

Le substrat sur lequel est réalisée l'électrode est avantageusement en matériau électroniquement conducteur.

Selon un mode de réalisation particulier, le substrat correspond au collecteur de courant de l'électrode. Il peut être en cuivre ou en aluminium notamment.

La présente invention concerne également l'électrode obtenue selon le procédé décrit ci-dessus, mais aussi la batterie secondaire lithium-ion comprenant cette électrode.

Comme déjà indiqué, le dépôt de la couche de protection, (oxyde métallique par exemple) est réalisé après séchage de l'électrode, c'est-à-dire avant calandrage. En d'autres termes et contrairement à l'art antérieur, le dépôt est réalisé lorsque l'électrode présente une porosité maximale. Ainsi, le matériau de la couche de protection (oxyde métallique notamment) pénètre au coeur du matériau d'électrode lors de son dépôt. A cet égard, les techniques de dépôt par ALD et CVD sont particulièrement avantageuses. En outre, le calandrage de l'électrode après dépôt de la couche de protection, permet d'une part d'augmenter la surface de recouvrement de la couche de protection déposée (oxyde métallique par exemple), et d'autre part augmenter la surface de contact entre le matériau actif et les additifs conducteurs et ainsi la conduction électronique.

L'électrode résultant de ce procédé peut notamment être assemblée dans une cellule électrochimique comprenant une électrode négative en LTO (titanate de lithium), en graphite, en silicium, ou en lithium métallique.

Comme déjà indiqué, une batterie secondaire comprend un coeur de pile constitué de deux électrodes de signes opposés et entre lesquelles est intercalé un électrolyte.

Bien entendu, dans ce type de dispositif, la couche de protection décrite ci-avant est en contact avec l'électrolyte.

L'électrolyte peut notamment être un mélange de solvants organiques, tels que les carbonates, dans lequel est ajouté un sel de métal alcalin. Dans une batterie lithium-ion, ce sel peut notamment être un sel de lithium, par exemple du LiPF₆ ou du LiTFSI (lithium bis(trifluoromethanesulfonyl)imide). Dans la mesure du possible, ce mélange est exempt de traces d'eau ou d'oxygène.

L'homme du métier saura choisir l'électrolyte adéquat.

L'électrolyte est généralement supporté par un séparateur d'électrodes. Il peut être composé d'un séparateur polymère ou composite microporeux imbibé d'électrolyte organique permettant le déplacement de l'ion lithium (cas d'une batterie lithium-ion) de l'électrode positive vers l'électrode négative et inversement (cas de la charge ou la décharge) générant ainsi le courant.

L'invention et les avantages qui en découlent ressortiront mieux des figures et exemples suivants donnés afin d'illustrer l'invention et non de manière limitative.

### DESCRIPTION DES FIGURES

La figure 1 illustre une électrode composite de faible épaisseur selon l'art antérieur, obtenue par dépôt de matériau actif et de noir de carbone sur un collecteur de courant, et dépôt d'une couche de protection sur la surface du matériau actif et du noir de carbone.
La figure 2a illustre une électrode composite obtenue selon l'art antérieur, par dépôt d'une encre d'électrode sur un collecteur de courant, et séchage, avant calandrage.
La figure 2b illustre une électrode composite obtenue selon l'art antérieur par dépôt d'une encre d'électrode sur un collecteur de courant, séchage et après calandrage.
La figure 3 illustre une électrode composite obtenue selon l'art antérieur, par dépôt d'une encre d'électrode sur un collecteur de courant, séchage du dépôt, calandrage, et dépôt d'une couche de protection.
La figure 4a illustre un mode de réalisation particulier d'une étape du procédé - objet de l'invention, dans laquelle une encre d'électrode composite est déposée sur un collecteur de courant, séchée, puis recouverte d'une couche de protection.
La figure 4b illustre un mode de réalisation particulier d'une étape du procédé - objet de l'invention, dans laquelle une encre d'électrode composite, préalablement séchée et recouverte d'une couche de protection, est calandrée pour former une électrode.

### DESCRIPTION DETAILLE DE L'INVENTION

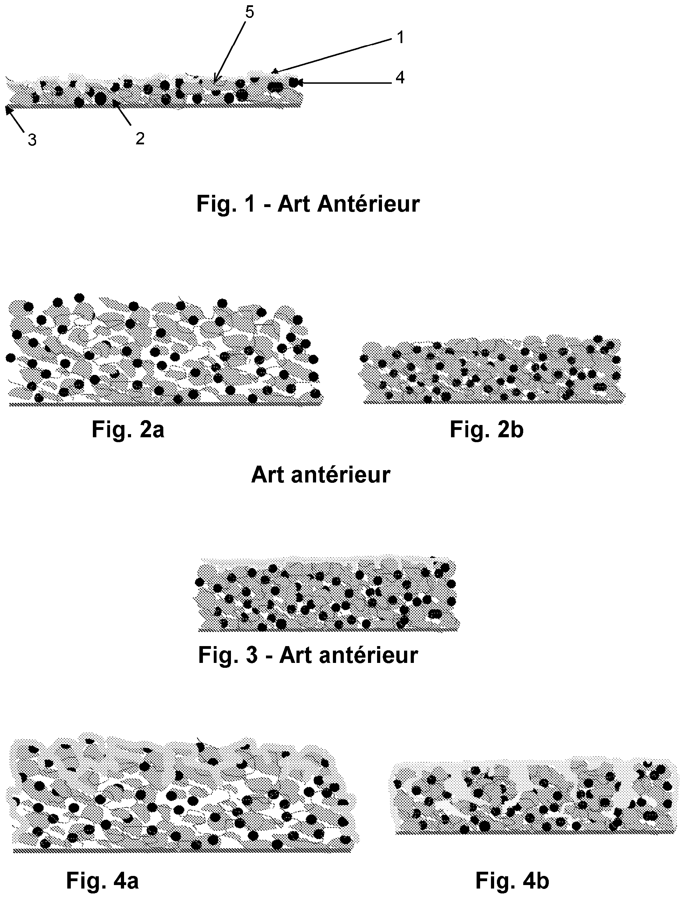

Les électrodes de l'art antérieur sont constituées du matériau actif (2), de particules conductrices (4) et d'un liant (5), déposés sur le substrat (3), et recouvert de la couche de protection (1) (figure 1). Dans une batterie secondaire conventionnelle de faible épaisseur et de faible grammage (<0,5mAh/cm²), les grains de matériau actif (2) restent en contact avec le substrat (3), permettant ainsi le transport des électrons vers l'électrode négative via le circuit externe lorsque le substrat est électroniquement conducteur.

L'augmentation de la densité d'énergie passe par une augmentation de grammage, soit de l'épaisseur de l'électrode et d'une diminution de la porosité.

La fabrication de ce type d'électrode selon l'art antérieur, comprend tout d'abord le dépôt d'une encre sur un substrat (3). Après séchage de l'électrode, le taux de porosité de l'électrode est de l'ordre de 80% en raison de l'évaporation des solvants de l'encre (figure 2a).

A ce stade, le contact entre les grains de matériaux et les additifs conducteurs n'est pas suffisant pour acheminer les électrons au collecteur de courant. Il est donc nécessaire de calandrer l'électrode pour réduire sa porosité afin d'obtenir une percolation électronique satisfaisante (figure 2b).

Un dépôt de matière protectrice sur une telle électrode calandrée est illustré par la figure 3. Un des inconvénients de cette configuration est qu'elle ne permet pas la conduction des ions sur toute l'épaisseur de l'électrode. Une forte inactivité électrochimique est alors observée, d'où une perte de densité d'énergie.

Dans le procédé selon l'invention (figures 4a et 4b), l'encre d'électrode est déposée sur le substrat (3) selon les techniques de dépôt conventionnelles. Une fois séchée, l'électrode présente une porosité maximale. Contrairement aux procédés de l'art antérieur, c'est à ce moment que la couche de protection (1) est déposée (figure 4a).

En raison de la forte porosité de l'électrode, la couche de protection (1) pénètre alors au sein de l'électrode. Ce procédé est favorisé par la technique de dépôt qui est avantageusement l'ALD ou la CVD.

Une fois le dépôt de la couche de protection réalisé, l'électrode est densifiée par calandrage (figure 4b).

## Revendications

1. Procédé de réalisation d'une électrode pour batterie secondaire, constitué des étapes suivantes :
- dépôt d'une encre comprenant au moins un matériau actif d'électrode, sur un substrat ;
- séchage de l'encre ;
- dépôt d'une couche de protection sur l'encre préalablement séchée ;
- calandrage de l'électrode ainsi formée
la couche de protection étant déposée avant le calandrage de l'électrode.

2. Procédé de réalisation d'une électrode pour batterie secondaire selon la revendication 1, ***caractérisé* en ce que** la couche de protection est en oxyde métallique ou en phosphate de métal.

3. Procédé de réalisation d'une électrode pour batterie secondaire selon la revendication 1, ***caractérisé* en ce que** la couche de protection est en un matériau choisi dans le groupe comprenant Al₂O₃, Cr₂O₃, ZrO, ZrO₂, MgO, Li₃PO₄, FePO₄, AlPO₄, et LIPON.

4. Procédé de réalisation d'une électrode pour batterie secondaire selon l'une des revendications 1 à 3, ***caractérisé* en ce que** la couche de protection est déposée par un technique de dépôt choisie dans le groupe comprenant ALD, PVD, CVD, MBE, EBPVD, et PLD.

5. Procédé de réalisation d'une électrode pour batterie secondaire selon l'une des revendications 1 à 4, ***caractérisé* en ce que** le substrat est en matériau électroniquement conducteur.

6. Procédé de réalisation d'une électrode pour batterie secondaire selon l'une des revendications 1 à 5, ***caractérisé* en ce que** le matériau actif est un matériau d'électrode positive.

7. Procédé de réalisation d'une électrode pour batterie secondaire selon la revendication 6, ***caractérisé* en ce que** le matériau actif d'électrode est un matériau d'insertion du cation lithium choisi dans le groupe comprenant les oxydes spinelle de lithium-manganèse-nickel, les oxydes de cobalt, les oxydes de vanadium, les oxydes de manganèse, le phosphate de fer, les graphites, le silicium, et les oxydes de titane.

8. Procédé de réalisation d'une électrode pour batterie secondaire selon la revendication 6, ***caractérisé* en ce que** le matériau actif est le LiMn_{1.5}Ni_{0.5}O₄.

## Patentansprüche

1. Verfahren zur Herstellung einer Sekundärbatterieelektrode, das die folgenden Schritte umfasst:
- Abscheiden einer Tinte, die mindestens ein aktives Elektrodenmaterial enthält, auf einem Substrat;
- Trocknen der Tinte;
- Abscheiden einer Schutzschicht auf der zuvor getrockneten Tinte;
- Kalandrieren der so gebildeten Elektrode.
die Schutzschicht wird dabei vor dem Kalandrieren der Elektrode abgeschieden.

2. Verfahren zur Herstellung einer Sekundärbatterieelektrode, nach Anspruch 1, ***dadurch gekennzeichnet*, dass** es sich bei der Schutzschicht aus einem Metalloxid oder einem Metallphosphat besteht.

3. Verfahren zur Herstellung einer Sekundärbatterieelektrode, nach Anspruch 1 , ***dadurch gekennzeichnet, dass*** die Schutzschicht aus einem Material besteht, das ausgewählt wird aus der Gruppe die AI₂O₃, Cr₂0₃, ZrO, Zr0₂, MgO, Li₃P0₄, FePO₄, AlPO₄ und LIPON umfasst.

4. Verfahren zur Herstellung einer Sekundärbatterieelektrode, nach irgendeinem der Ansprüche 1 bis 3, ***dadurch gekennzeichnet, dass*** die Schutzschicht durch eine Abscheidetechnik aufgebracht wird, die ausgewählt wird aus der Gruppe zu der ALD, PVD, CVD, MBE, EBPVD und P LD gehören.

5. Verfahren zur Herstellung einer Sekundärbatterieelektrode, nach irgendeinem der Ansprüche 1 bis 4, ***dadurch gekennzeichnet, dass*** das Substrat ein elektrisch leitendes Material ist.

6. Verfahren zur Herstellung einer Sekundärbatterieelektrode, nach irgendeinem der Ansprüche 1 bis 5, ***dadurch gekennzeichnet, dass*** das aktive Material ein positives Elektrodenmaterial ist.

7. Verfahren zur Herstellung einer Sekundärbatterieelektrode, nach Anspruch 6, ***dadurch gekennzeichnet, dass*** das aktive Material ein Material zur Eingliederung des Lithium-Kation ist, ausgewählt aus der Gruppe zu der Lithium- Mangan-Nickel - Spinell- Oxide, Kobaltoxide, Vanadiumoxide, Manganoxide, Eisenphosphat, Graphite, Silizium und Titanoxid gehören.

8. Verfahren zur Herstellung einer Sekundärbatterieelektrode, nach Anspruch 6, **dadurch gekennzeichnet, dass** das aktive Material LiMn_{1.5}Ni_{0.5}O₄ ist.

## Claims

1. A method of manufacturing a secondary battery electrode constituted by the steps of:
- depositing an ink comprising at least one active electrode material, on a substrate;
- drying the ink;
- depositing a protection layer on the previously dried ink;
- calendering the electrode thus formed ;
the protection layer being deposited before the calendering of the electrode.

2. The secondary battery electrode manufacturing method of claim 1, ***characterized* in that** the protection layer is made of metal oxide or of metal phosphate.

3. The secondary battery electrode manufacturing method of claim 1, ***characterized* in that** the protection layer is made of a material selected from the group comprising Al₂O₃, Cr₂O₃, ZrO, ZrO₂, MgO, Li₃PO₄, FePO₄, AlPO₄, and LIPON.

4. The secondary battery electrode manufacturing method of any of claims 1 to 3, ***characterized* in that** the protection layer is deposited by a deposition technique selected from the group comprising ALD, PVD, CVD, MBE, EBPVD, and PLD.

5. The secondary battery electrode manufacturing method of any of claims 1 to 4, ***characterized* in that** the substrate is made of an electronically conducting material.

6. The secondary battery electrode manufacturing method of any of claims 1 to 5, ***characterized* in that** the active material is a positive electrode material.

7. The secondary battery electrode manufacturing method of claim 6, ***characterized* in that** the active electrode material is a lithium cation insertion material selected from the group comprising spinel lithium-manganese-nickel oxides, cobalt oxides, vanadium oxides, manganese oxides, iron phosphate, graphites, silicon, and titanium oxides.

8. The secondary battery electrode manufacturing method of claim 6, ***characterized* in that** the active material is LiMn_{1.5}Ni_{0.5}O₄.
